# FASCICULE DE BREVET EUROPEEN

(11) **EP 3 233 535 B1**
(45) Date de publication et mention de la délivrance du brevet: **21.11.2018**
(21) Numéro de dépôt: 15804550.0
(22) Date de dépôt: 04.12.2015
(51) Int. Cl.: B60C 15/00, B60C 15/06, B60C 9/02, B60C 15/04

(54) **PNEUMATIQUE COMPORTANT UNE ARMATURE DE CARCASSE FORMEE DE DEUX COUCHES**
REIFEN MIT EINER AUS ZWEI LAGEN BESTEHENDEN KARKASSENVERSTÄRKUNG
TYRE COMPRISING A CARCASS REINFORCEMENT MADE UP OF TWO LAYERS

(30) Priorité: 16.12.2014 FR 1462469
(43) Date de publication de la demande: 25.10.2017
(73) Titulaire: Compagnie Générale des Etablissements Michelin, 63000 Clermont-Ferrand (FR)
(72) Inventeur: FRANCIA, Marc, 63040 Clermont-Ferrand Cedex 9 (FR); POTIN, Yves, 63040 Clermont-Ferrand Cedex 9 (FR); VILCOT, Florian, 63040 Clermont-Ferrand Cedex 9 (FR)
(74) Mandataire: Le Cam, Stéphane Georges Elie
(86) Numéro de dépôt international: PCT/EP2015/078721
(87) Numéro de publication internationale: WO 2016/096490

(56) Documents cités:
- EP-A1- 0 463 273
- EP-A1- 1 792 752
- FR-A1- 2 507 970
- FR-A1- 2 953 459
- US-A- 5 056 575

## Description

La présente invention concerne un pneumatique, à armature de carcasse radiale constituée de deux couches d'éléments de renforcement.

Bien que non limitée à ce type d'applications, l'invention sera plus particulièrement décrite en référence à un pneumatique destiné à équiper des véhicules de type petits poids-lourds (« light truck » en anglais), tels que, par exemple des camions ou des camionnettes.

D'une manière générale dans les pneumatiques de type petit poids-lourds, l'armature de carcasse est ancrée de part et d'autre dans la zone du bourrelet et est surmontée radialement par une armature de sommet.

L'armature de carcasse est usuellement constituée de deux couches constituées d'éléments de renforcement en textile. De manière avantageuse, lorsque les deux couches d'armature de sommet sont retournées autour d'une tringle, les extrémités des retournements de chacune des couches sont radialement décalées pour éviter de trop grandes proximités entre des extrémités de couches d'éléments de renforcement connues pour créer des zones de perturbation au sein des mélanges polymériques.

L'armature de sommet est constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette couche, dite de triangulation, étant radialement située entre l'armature de carcasse et la première couche de sommet dite de travail, formées de fils ou câbles parallèles présentant des angles au plus égaux à 45° en valeur absolue. La couche de triangulation forme avec au moins ladite couche de travail une armature triangulée, qui présente, sous les différentes contraintes qu'elle subit, peu de déformations, la couche de triangulation ayant pour rôle essentiel de reprendre les efforts de compression transversale dont est l'objet l'ensemble des éléments de renforcement dans la zone du sommet du pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

Des éléments de renforcement circonférentiels sont des éléments de renforcement qui font avec la direction circonférentielle des angles compris dans l'intervalle + 2,5°, - 2,5° autour de 0°.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

Le document WO 97/27070 décrit un exemple de pneumatiques pour véhicule petit poids-lourds dont l'armature de carcasse est constituée de deux couches, chacune étant retournée autour d'une tringle dans chacun des bourrelets. Afin de permettre un décalage radial des extrémités de retournement les semi-finis correspondants à chacun des couches d'armature de carcasse présentent des dimensions différentes. Outre, la nécessité de multiplier les semi-finis, la fabrication d'un tel pneumatique implique un dispositif complexe permettant la pose de deux couches d'armature de carcasse différentes.

Le document EP 1 792 752 décrit un pneumatique pour véhicule petit poids-lourds dont l'armature de carcasse est constituée de deux couches, une seule étant retournée autour d'une tringle dans chacun des bourrelets. La deuxième couche vient couvrir chacun des retournements de la première couche dans les zones des bourrelets. Avec une telle conception, il n'y a pas de problèmes de proximité des extrémités de retournement mais la tenue de la couche d'armature de carcasse axialement la plus extérieure est plus délicate dans certains types d'usage, notamment du fait des charges portées.

Le document WO 97/27070 décrit un pneumatique pour véhicule petit poids-lourds dont l'armature de carcasse est constituée de deux couches associées à une troisième plus courte venant brider l'ensemble sur la tringle nécessitant des couches semi-finis de tailles différentes et un procédé de fabrication relativement complexe.

Un but de l'invention est de fournir des pneumatiques pour véhicules de type "petits Poids-Lourds", allégés par rapport aux pneumatiques usuels tout en assurant des performances des pneumatiques satisfaisantes notamment en termes d'endurance.

Ce but est atteint selon l'invention par un pneumatique pour véhicule de type petit poids lourd, à armature de carcasse radiale, dont la pression de gonflage est supérieure ou égale à 6 bars, comprenant une armature de sommet, elle-même coiffée radialement d'une bande de roulement, ladite bande de roulement étant réunie à deux bourrelets, comportant une tringle, par l'intermédiaire de deux flancs, ladite armature de carcasse étant constituée de deux couches d'éléments de renforcement textiles, une première couche d'armature de carcasse étant retournée autour de la tringle dans chacun des bourrelets, les extrémités de ladite première couche d'armature de carcasse étant radialement extérieure au point radialement le plus extérieur de la tringle dans chaque bourrelet et la deuxième couche d'armature de carcasse s'étendant d'un bourrelet à l'autre, sans aucun retournement autour de la tringle dans chacun des bourrelets, ses extrémités étant axialement extérieures au point axialement le plus extérieur de la tringle dans chaque bourrelet, ledit pneumatique comprenant dans chaque flanc un premier élément de remplissage, axialement intérieur à la surface extérieur d'un flanc et axialement extérieur au retournement de la première couche d'armature de carcasse, constitué de mélange caoutchouteux présentant un module sécant d'élasticité sous tension à 10 % d'allongement Mj, chaque bourrelet comprenant un deuxième élément de remplissage, constitué de mélange caoutchouteux présentant un module sécant d'élasticité sous tension à 10 % d'allongement Mt, prolongeant radialement vers l'extérieur le noyau tringle, chacune des couches d'armature de carcasse présentant une force rupture par unité de largeur supérieure à 2250 daN/dm, la rigidité minimum par unité de la largeur, mesurée pour un allongement inférieur à 10%, de la deuxième couche d'armature de carcasse étant strictement supérieure à une valeur égale à 20% de la rigidité minimum par unité de largeur, mesurée pour un allongement inférieur à 10%, de la première couche d'armature de carcasse, les éléments de renforcement des deux couches d'armature de carcasse présentant un titre inférieur à 750 tex, l'allongement sous une force de 20 daN des éléments de renforcement de la deuxième couche d'armature de carcasse étant supérieur à 4% et les modules sécants d'élasticité sous tension à 10 % d'allongement Mt, Mj satisfaisant la relation Mt/Mj ≥ 1.

Au sens de l'invention, une armature de carcasse radiale signifie que les éléments de renforcement des couches d'armature de carcasse sont dans un plan formant un angle avec un plan radial inférieur ou égal à 10°, les deux plans étant sécants selon un axe perpendiculaire à l'axe de rotation.

La force rupture par unité de largeur d'une couche d'éléments de renforcement et la rigidité par unité de largeur d'une couche d'éléments de renforcement sont déterminée à partir des mesures effectuées sur les éléments de renforcement et de la densité d'éléments de renforcement de la couche, elle-même définie par le nombre d'éléments de renforcement par unité de largeur.

La mesure de densité s'effectue en comptant visuellement le nombre de fils présents sur un échantillon de tissu non déformé d'une largeur de 10 cm. Le nombre de fils comptés est directement la valeur de densité du tissu en fils/dm. La mesure est effectuée dans la zone du bourrelet du pneumatique, radialement à l'intérieur de la tringle.

En ce qui concerne les fils ou câbles textiles, les propriétés mécaniques sont mesurées sur des fibres ayant été soumises à un conditionnement préalable. Par "conditionnement préalable", on entend le stockage des fibres pendant au moins 48 heures, avant mesure, dans une atmosphère standard selon la norme européenne NF EN ISO 139 (température de 20 +/- 2°C ; hygrométrie relative de 65 +/- 4%HR). Les propriétés mécaniques en extension (Force à la rupture, allongements sous charge) sont mesurées suivant une méthode de mesure spécifique à l'aide de machines de traction statique étalonnées de marque INSTRON ou ZWICK. Les fils subissent une traction sur une longueur initiale entre mâchoires de 400 mm à une vitesse nominale de 200 mm/min. L'expression des résultats d'essai dépend du fil testé : le résultat d'essai peut être soit une seule valeur individuelle soit la moyenne de 5 valeurs individuelles. La mesure de rigidité minimum est déterminée par la pente minimum de la courbe d'allongement entre 0 et 10 % sur un intervalle de 2%.

Les mesures de propriétés mécaniques des éléments de renforcement textiles sont réalisées sur pneumatique neuf.

Le pneumatique ainsi défini selon l'invention peut équiper des véhicules de type petit poids lourd et présente une masse réduite par rapport aux pneumatiques usuels avec des performances en termes d'endurance au moins aussi bonnes que celles des pneumatiques plus usuels.

De préférence selon l'invention, dans un plan méridien, une unique couche d'éléments de renforcement est présente axialement entre la surface extérieure du pneumatique et le retournement de la première couche d'armature de carcasse dans une zone délimitée radialement vers l'extérieur par la direction axiale passant l'extrémité du retournement de la première couche d'armature de carcasse et radialement vers l'intérieur par la direction axiale passant par l'intersection de la droite passant par le centre O de la courbure de la zone du pneumatique venant en appui sur le crochet de la jante, destinée à recevoir le pneumatique, et formant un angle de 45° avec la direction axiale et le retournement de la première couche d'armature de carcasse.

Pour former une couche d'armature de carcasse il est usuel de souder les extrémités de l'élément semi fini qui la constitue. Il est également usuel de former un recouvrement entre les deux extrémités pour renforcer ladite soudure. Au sens de l'invention, la zone de recouvrement forme une seule et unique couche bien que l'on trouve deux épaisseurs de ladite couche.

L'utilisation de deux couches d'éléments de renforcement en textile réalisées conformément à l'invention pour constituer la carcasse permet, tout en satisfaisant les critères de conception de tels pneumatiques que sont notamment les performances en matière d'endurance, du fait des matériaux et de la structure du pneumatique de proposer un pneumatique plus léger que les pneumatiques usuels. En effet, les inventeurs ont notamment su mettre en évidence que le choix de deux couches d'éléments de renforcement textiles pour former l'armature de carcasse du pneumatique conformément à ce que propose l'invention conduit à une structure de pneumatique plus souple que celle des pneumatiques usuels et autorise ainsi une réalisation du bourrelet plus légère. Il est en effet usuel pour permettre une endurance satisfaisante de tels pneumatiques de rigidifier la zone basse du pneumatique ; cela se traduit habituellement par des épaisseurs de bourrelet relativement importantes qui alourdissent notablement le pneumatique.

Par ailleurs, le pneumatique selon l'invention qui ne comporte qu'une couche d'armature de carcasse retournée autour des tringles améliore les résultats en termes d'endurance du fait de l'absence de plusieurs extrémités de couches proches les unes des autres dans la zone du bourrelet qui vient prendre appui sur le crochet de jante.

Les valeurs de force rupture par unité de largeur supérieure à 2250 daN/dm de chacune des couches d'armature de carcasse permettent notamment la tenue du pneumatique à la pression de gonflage.

Avantageusement selon l'invention, chacune des couches d'armature de carcasse présentent une force rupture par unité de largeur supérieure ou égale à 2900 daN/dm, notamment dans les cas d'usages particulièrement sévères.

Les conditions de rigidité minimum par unité de la largeur, mesurée pour un allongement inférieur à 10%, entre les couches d'armature de carcasse permettent par ailleurs d'assurer une répartition de la reprise des efforts entre les couches d'armature de carcasse de sorte que la première couche d'armature de carcasse ne contribue pas à un trop grand cisaillement des mélanges caoutchouteux environnants dans la zone des bourrelets et nuise ainsi aux performances en termes d'endurance.

Avantageusement, la rigidité minimum par unité de largeur, mesurée pour un allongement inférieur à 10%, de la deuxième couche d'armature de carcasse est inférieure ou égale à une valeur égale à 100% de la rigidité minimum par unité de largeur, mesurée pour un allongement inférieur à 10%, de la première couche d'armature de carcasse pour encore optimiser les performances en termes d'endurance.

Le choix d'éléments de renforcement de la deuxième couche d'armature de carcasse présentant un allongement, sous une force de 20 daN, supérieur à 4% favorise encore les performances en termes d'endurance notamment du fait d'éléments de renforcement plus favorables pour résister au mise en compression lors du roulage du pneumatique.

Le choix des éléments de renforcement des deux couches d'armature de carcasse présentant un titre inférieur à 750 tex permet de contribuer à l'allégement du pneumatique par rapport aux pneumatiques usuels tout en assurant des performances des pneumatiques satisfaisantes notamment en termes d'endurance

Selon un mode de réalisation préféré de l'invention, les éléments de renforcement de la première couche d'armature de carcasse présentent un titre supérieur à 300 tex et de préférence supérieur à 400 tex.

Les éléments de renforcement de la première couche d'armature de carcasse sont, selon une variante avantageuse de l'invention, identiques à ceux de la deuxième couche d'armature de carcasse.

Le choix de la relation Mt/Mj ≥ 1 satisfaite par les modules Mt et Mj contribue encore à favoriser les performances d'endurance du pneumatique.

Avantageusement selon l'invention, le pneumatique présente un load index strictement supérieur à 99, avantageusement encore supérieur à 110 et de préférence supérieur ou égal à 118.

Selon un mode de réalisation avantageux de l'invention, la deuxième couche d'armature de carcasse étant constituée d'éléments de renforcement entre deux couches de calandrage formées de mélange caoutchouteux présentant un module sécant d'élasticité sous tension à 10 % d'allongement Mc₂, les modules sécants d'élasticité sous tension à 10 % d'allongement Mc₂, Mj satisfont la relation 0.6 ≤ Mc₂/Mj ≤ 4 et de préférence, satisfont la relation Mc₂/Mj < 4.

En ce qui concerne les compositions de caoutchouc, les mesures de module sont effectuées en traction selon la norme AFNOR-NFT-46002 de septembre 1988 : on mesure en seconde élongation (i.e., après un cycle d'accommodation) le module sécant nominal (ou contrainte apparente, en MPa) à 10% d'allongement (conditions normales de température et d'hygrométrie selon la norme AFNOR-NFT-40101 de décembre 1979).

Les mesures de module des compositions de caoutchouc sont réalisées sur pneumatique neuf.

De telles relations entre les rigidités des couches de calandrage de la deuxième couche d'armature de carcasse et du premier élément de remplissage favorisent les performances d'endurance du pneumatique notamment en limitant les effets de cisaillements entre lesdits mélanges caoutchouteux.

Lorsque notamment le pneumatique est soumis à des conditions de roulage particulièrement sévères par exemple en termes de charge, les modules sécants d'élasticité sous tension à 10 % d'allongement Mc₂, Mj satisfont la relation 1 ≤ Mc₂/Mj.

Avantageusement encore selon l'invention, pour favoriser les performances d'endurance du pneumatique, les couches d'armature de carcasse étant constituées d'éléments de renforcement entre deux couches de calandrage formées de mélange caoutchouteux présentant un module sécant d'élasticité sous tension à 10 % d'allongement, respectivement notés Mc₁ pour la première couche d'armature de carcasse et Mc₂ pour la deuxième couche d'armature de carcasse, les modules sécants d'élasticité sous tension à 10 % d'allongement Mc₁, Mc₂ satisfont la relation Mc₂/Mc₁ ≤ 4.6.

Lorsque notamment le pneumatique est soumis à des conditions de roulage particulièrement sévères par exemple en termes de charge, les modules sécants d'élasticité sous tension à 10 % d'allongement Mc₁, Mc₂ satisfont la relation 1 ≤ Mc₂/Mc₁.

Selon un mode de réalisation préféré de l'invention, dans plan méridien, dans chaque bourrelet, le pneumatique comporte une couche d'éléments de renforcement en polyamide aromatique au contact de ladite première couche d'armature de carcasse sur toute sa longueur, au moins une partie étant radialement intérieure à la tringle et dont les extrémités sont radialement extérieures au centre géométrique de la tringle et ladite première couche d'armature de carcasse étant intercalée entre la tringle et la couche d'éléments de renforcement en polyamide aromatique.

Une telle couche d'éléments de renforcement en polyamide aromatique permet lors de roulages prolongés de préserver la première couche d'armature de carcasse qui est soumise au niveau du bourrelet et notamment sous la tringle à des élévations de température conséquentes, ses éléments de renforcement subissant des phénomènes de striction. En effet, la couche d'éléments de renforcement en polyamide aromatique forme tout d'abord une protection thermique pour la première couche d'armature de carcasse et en outre du fait de l'absence de sensibilité des éléments de renforcement en polyamide aromatique à la température et de leur grande rigidité, elle protège les éléments de renforcement de la première couche d'armature de carcasse des phénomènes de striction.

La couche d'éléments de renforcement en polyamide aromatique favorise ainsi encore les performances d'endurance du pneumatique, notamment lors de roulages prolongés.

Une variante de réalisation de l'invention prévoit encore, dans tout plan méridien, dans chaque bourrelet, que le pneumatique comporte une armature de contention entourant la tringle et un volume de mélange caoutchouteux directement au contact de la tringle. Avantageusement, l'armature de contention est une couche d'éléments de renforcement constitués de fibres en polyamide aliphatique, orientés sensiblement radialement. Une telle armature de contention est par exemple décrite dans le brevet EP 2370275.

Une telle couche de contention entourant la tringle et un volume de mélange caoutchouteux directement au contact de la tringle favorise également les performances d'endurance du pneumatique notamment lorsque le pneumatique est soumis à des charges portées très importantes et/ou de fortes pressions de gonflage en limitant notamment les phénomènes d'indentation de la première couche d'armature de carcasse par la tringle.

Avantageusement selon l'invention, la tringle est de type TPFR de forme hexagonale.

Une variante avantageuse de l'invention prévoit encore notamment dans le cas de roulage en conditions extrêmes et notamment sous fortes charges que, la première couche d'armature de carcasse formant une partie principale entre les deux tringles et un retournement dans chacun des bourrelets, le retournement de la première couche d'armature de carcasse est distant de la partie principale d'une distance d comprise entre 0.5 et 3.2 mm sur une longueur d'au moins 15 mm.

Selon cette variante de réalisation de l'invention, le retournement de la première couche d'armature de carcasse est plaqué contre la partie principale de la première couche d'armature de carcasse. La deuxième couche d'armature de carcasse est de ce fait également rapprochée de la partie principale de la première couche d'armature de carcasse et ainsi éloignée de la zone du pneumatique venant en appui sur le crochet de jante ; elle est en conséquence moins sollicitée en compression lors du roulage. Les performances en termes d'endurance sont ainsi encore améliorées. En outre, ce type de conception est également favorable pour lutter contre les risques de déroulement de la première couche d'armature de carcasse.

Selon une réalisation préférée de l'invention, la direction passant par le centre O de la courbure de la zone du pneumatique venant en appui sur le crochet de la jante destinée à recevoir le pneumatique et l'extrémité axialement extérieure de la couche d'éléments de renforcement en polyamide aromatique forme un angle α avec la direction axiale compris entre 0 et 45°.

De préférence également selon l'invention, la direction passant par le centre O de la courbure de la zone du pneumatique destiné venant en appui sur le crochet de la jante destinée à recevoir le pneumatique et l'extrémité axialement intérieure de la couche d'éléments de renforcement en polyamide aromatique forme un angle β avec la direction axiale compris entre 0 et 20°.

De tels positionnements des extrémités de la couche d'éléments de renforcement en polyamide aromatique favorisent encore les performances du pneumatique en termes d'endurance.

De préférence encore selon l'invention toujours en vue de performances d'endurance améliorées, dans tout plan méridien, dans chaque bourrelet, l'extrémité de la deuxième couche d'armature de carcasse est axialement extérieure au centre géométrique de la tringle et la direction passant par le centre géométrique de la tringle et l'extrémité de la deuxième couche d'armature de carcasse forme un angle θ avec la direction axiale inférieur à 50°.

Une variante avantageuse de l'invention prévoit encore que la distance entre l'extrémité de la deuxième couche d'armature de carcasse et l'extrémité axialement la plus extérieure de la couche d'éléments de renforcement en polyamide aromatique est supérieure à 5 mm. Avantageusement encore, le recouvrement entre la deuxième couche d'armature de carcasse et la couche d'éléments de renforcement en polyamide aromatique est d'au moins 5 mm.

D'autres détails et caractéristiques avantageux de l'invention ressortiront ci-après de la description des exemples de réalisation de l'invention en référence aux figures 1 à 4 qui représentent :
- figure 1, une représentation schématique d'une vue en coupe d'un bourrelet selon une première variante de réalisation d'un pneumatique selon l'invention,
- figure 2, une représentation schématique d'une vue en coupe d'un bourrelet selon une deuxième variante de réalisation d'un pneumatique selon l'invention,
- figure 3, une représentation schématique d'une vue en coupe d'un bourrelet selon une troisième variante de réalisation d'un pneumatique selon l'invention,
- figure 4, une représentation schématique d'une vue en coupe d'un bourrelet selon une quatrième variante de réalisation d'un pneumatique selon l'invention.

Les figures ne sont pas représentées à l'échelle pour en simplifier la compréhension.

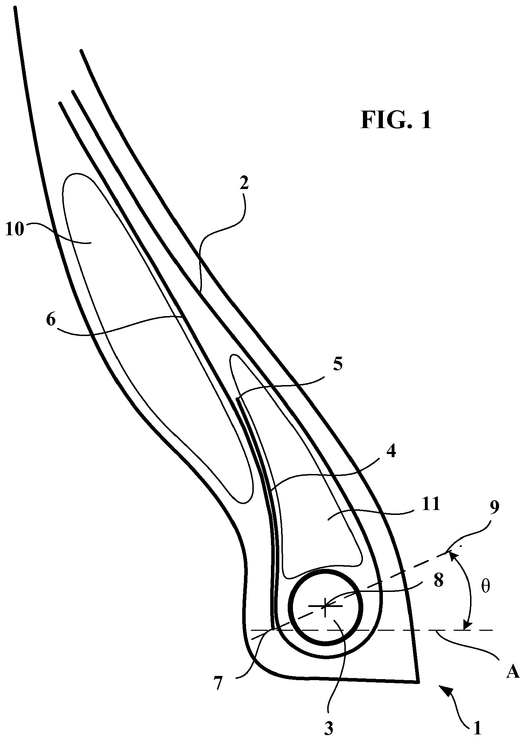

La figure 1 illustre une représentation schématique en coupe d'un bourrelet 1 d'un pneumatique de type petit poids lourd de dimension 7.50R16. Au niveau de ce bourrelet 1 du pneumatique on retrouve une partie de la première couche d'armature de carcasse 2 enroulée autour d'une tringle 3 pour former un retournement 4 présentant une extrémité 5. Est également représentée une partie de la deuxième couche d'armature de carcasse 6 dont l'extrémité 7 est axialement extérieure au centre géométrique 8 de la tringle 3.

L'angle θ formé par la direction 9, passant par le centre géométrique de la tringle et l'extrémité de la deuxième couche d'armature de carcasse, et la direction axiale A est égal à 30° et donc inférieur à 50°.

Les couches d'armature de carcasse 2 et 6 sont constituées d'éléments de renforcement entre deux couches de calandrage formées de mélange caoutchouteux présentant des modules sécants d'élasticité sous tension à 10 % d'allongement, respectivement notés Mc₁ pour la première couche d'armature de carcasse et Mc₂ pour la deuxième couche d'armature de carcasse.

Le module sécant d'élasticité sous tension à 10 % d'allongement Mc₁ de la première couche d'armature de carcasse 2 est égal à 3.3 MPa.

Le module sécant d'élasticité sous tension à 10 % d'allongement Mc₂ de la deuxième couche d'armature de carcasse 6 est égal à 12.5 MPa.

Le ratio Mc₂/Mc₁ est égal à 3.8 et donc bien inférieur à 4.6.

Sur cette figure 1, on peut encore observer un premier élément de remplissage 10, axialement intérieur au flanc et axialement extérieur au retournement de la première couche d'armature de carcasse 4, constitué de mélange caoutchouteux présentant un module sécant d'élasticité sous tension à 10 % d'allongement Mj égal à 7.8 MPa.

Le ratio Mc₂/Mj est égal à 1.6 et donc bien compris entre 0.6 et 4.

Le bourrelet 1 comporte encore un deuxième élément de remplissage 11 prolongeant radialement vers l'extérieur le noyau tringle, constitué de mélange caoutchouteux présentant un module sécant d'élasticité sous tension à 10 % d'allongement Mt égal à 7.8 MPa Le deuxième élément de remplissage 11 a, dans tout plan méridien, une section sensiblement triangulaire.

Le ratio Mt/Mj est égal à 1 et donc bien supérieur ou égal à 1.

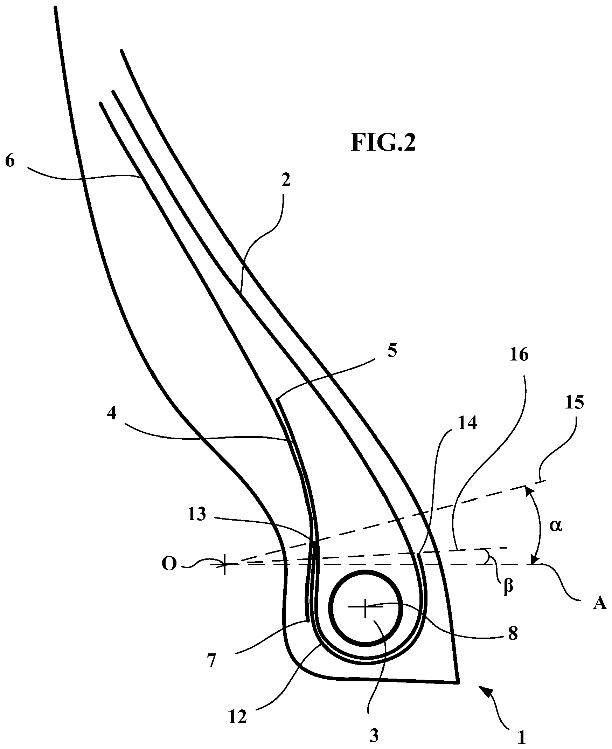

La figure 2 illustre une représentation schématique d'une vue en coupe d'un bourrelet 1 selon une deuxième variante de réalisation d'un pneumatique selon l'invention. Cette deuxième variante se distingue de la première variante illustrée sur la figure 1 par la présence d'une couche 12 d'éléments de renforcement en polyamide aromatique. Cette couche 12 d'éléments de renforcement en polyamide aromatique est disposée sur toute sa longueur au contact de ladite première couche d'armature de carcasse 2 de sorte qu'au moins une partie de la couche 12 est radialement intérieure à la tringle 3 et de sorte que les extrémités 13, 14 de la couche 12 sont radialement extérieures au centre géométrique de la tringle. Le positionnement de la couche12 est tel que la première couche d'armature de carcasse 2 est intercalée entre la tringle 3 et la couche 12 d'éléments de renforcement en polyamide aromatique.

L'angle α formé par la direction 15, passant par le centre O de la courbure du crochet de la jante destinée à recevoir le pneumatique et l'extrémité 13 axialement extérieure de la couche 12 d'éléments de renforcement en polyamide aromatique, et la direction axiale A est égal à 20°. L'angle α est donc compris entre 0 et 45°.

L'angle β formé par la direction 16, passant par le centre O de la courbure du crochet de la jante destinée à recevoir le pneumatique et l'extrémité 14 axialement intérieure de la couche 12 d'éléments de renforcement en polyamide aromatique, et la direction axiale A est égal à 10°. L'angle β est donc compris entre 0 et 20°.

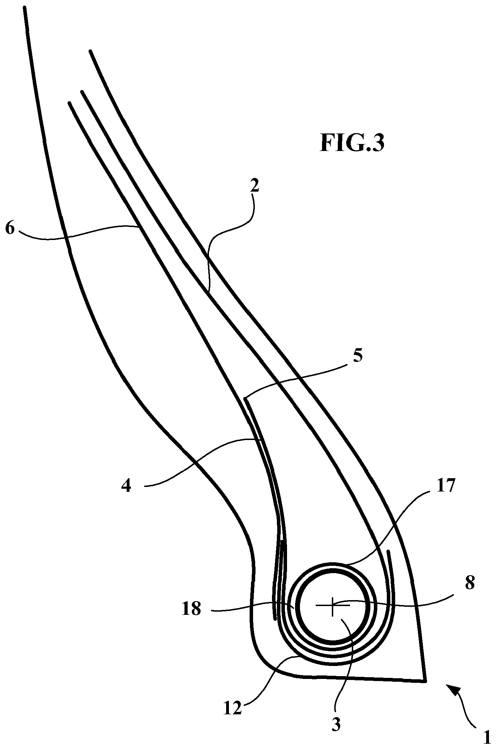

La figure 3 illustre une représentation schématique d'une vue en coupe d'un bourrelet 1 selon une troisième variante de réalisation d'un pneumatique selon l'invention. Cette troisième variante se distingue de la deuxième variante illustrée sur la figure 2 par la présence dans chaque bourrelet d'une armature de contention 17 entourant la tringle 3 et un volume de mélange caoutchouteux 18 directement au contact de la tringle.

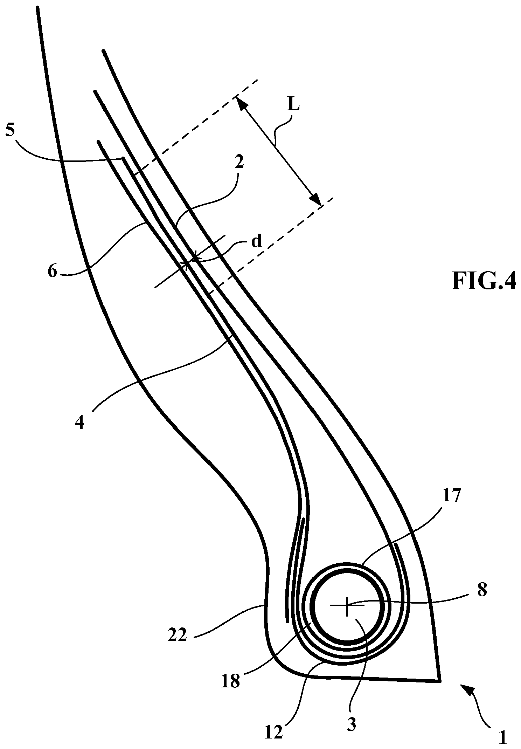

La figure 4 illustre une représentation schématique d'une vue en coupe d'un bourrelet 1 selon une quatrième variante de réalisation d'un pneumatique selon l'invention. Cette quatrième variante se distingue de la troisième variante illustrée sur la figure 3 par une extrémité 5 du retournement 4 de la première couche d'armature de carcasse 2 radialement plus éloignée de la tringle. En outre, selon cette quatrième variante de l'invention, le retournement 4 de la première couche d'armature de carcasse 2 est plaqué sur la partie principale de la première couche d'armature de carcasse 2. Ce placage se traduit par une distance d au plus égale à 1,9 mm sur une longueur L égale à 20 mm. Sur cette longueur de 20 mm la distance d varie entre 1.2 et 1.9 mm.

La distance d est mesurée entre la génératrice d'un élément de renforcement de la partie principale de la première couche d'armature de carcasse 2 et la génératrice d'un élément de renforcement retournement 4 de la première couche d'armature de carcasse 2 selon une direction normale aux surfaces de calandrage du retournement 4 et de la partie principale de la première couche d'armature de carcasse 2.

Selon l'une ou l'autre de ces variantes de réalisation de l'invention ou toute autre configuration conforme à l'invention, selon un premier mode de réalisation les éléments de renforcement de la première couche d'armature de carcasse 2 sont identiques à ceux de la deuxième couche d'armature de carcasse 6.

Des pneumatiques selon ce premier mode de réalisation ont été réalisés avec des câbles PET (polyéthylène téréphtalate) de titre 334/2.

L'allongement des câbles PET (polyéthylène téréphtalate) de titre 334/2 est égal à 9.6 % et donc supérieur à 4% sous une force 20 daN.

La force rupture par unité de largeur des couches d'armature de carcasse est égale à 3280 daN/dm et donc supérieure à 2250 daN/dm. Elle est déterminée par le produit de la densité d'éléments de renforcement, égale à 80 fils/dm, et de la force rupture d'un élément de renforcement, égale à 41 daN.

La rigidité minimum par unité de largeur, mesurée pour un allongement inférieur à 10%, des couches d'armature de carcasse est égale à 123 daN/dm/%. Elle est déterminée par le produit de la densité d'éléments de renforcement, égale à 80 fils/dm, et de la rigidité minimum d'un élément de renforcement, égale à 1.54 daN/%.

Selon un deuxième mode de réalisation les éléments de renforcement de la première couche d'armature de carcasse 2 sont différents de ceux de la deuxième couche d'armature de carcasse 6.

Des pneumatiques selon ce deuxième mode de réalisation ont été réalisés avec des câbles PET (polyéthylène téréphtalate) de titre 334/2 pour la première couche d'armature de carcasse 2 et des câbles en polyamide aliphatique de titre 210/3 pour la deuxième couche d'armature de carcasse.

L'allongement des câbles en polyamide aliphatique de titre 210/3 est égal à 14.5 % et donc supérieur à 4% sous une force 20 daN.

La force rupture par unité de largeur de la deuxième couche d'armature de carcasse est égale à 4028 daN/dm et donc supérieure à 2250 daN/dm. Elle est déterminée par le produit de la densité d'éléments de renforcement, égale à 75 fils/dm, et de la force rupture d'un élément de renforcement, égale à 53.7 daN.

La rigidité minimum par unité de largeur, mesurée pour un allongement inférieur à 10%, de la première couche d'armature de carcasse est égale à 123 daN/dm/%. Elle est déterminée par le produit de la densité d'éléments de renforcement, égale à 80 fils/dm, et de la rigidité minimum d'un élément de renforcement, égale à 1.54 daN/%.

La rigidité minimum par unité de largeur, mesurée pour un allongement inférieur à 10%, de la deuxième couche d'armature de carcasse est égale à 55 daN/dm/%. Elle est déterminée par le produit de la densité d'éléments de renforcement, égale à 75 fils/dm, et de la rigidité minimum d'un élément de renforcement, égale à 0.73 daN/%.

La rigidité minimum par unité de largeur, mesurée pour un allongement inférieur à 10%, de la deuxième couche d'armature de carcasse est donc égale à 45 % de la rigidité minimum par unité de largeur, mesurée pour un allongement inférieur à 10%, de la première couche d'armature de carcasse et donc strictement supérieure à une valeur égale à 20 % de la rigidité minimum par unité de largeur, mesurée pour un allongement inférieur à 10%, de la première couche d'armature de carcasse.

Des essais ont été réalisés avec des pneumatiques réalisés selon l'invention et d'autres avec des pneumatiques dits de référence.

Les pneumatiques selon l'invention qui sont testés sont conformes à la représentation de la figure 1.

Une première série de pneumatiques selon l'invention est réalisée selon le premier mode présenté ci-dessus et les câbles des couches d'armature de carcasse sont des câbles PET (polyéthylène téréphtalate) de titre 334/2.

Une deuxième série de pneumatiques selon l'invention est réalisée selon le deuxième mode présenté ci-dessus et les câbles sont des câbles PET de titre 334/2 pour la première couche d'armature de carcasse 2 et des câbles en polyamide aliphatique de titre 210/3 pour la deuxième couche d'armature de carcasse.

Les pneumatiques de référence sont des pneumatiques usuels de même dimension comportant une seule couche d'armature de carcasse retournée autour d'une tringle semblable à la première couche d'armature de carcasse 2 représentée sur la figure 1 et comportant des câbles métalliques de type 12.18.

Des essais d'endurance ont été réalisés sur une machine de test imposant à chacun des pneumatiques un roulage ligne droite à une vitesse variant de 50 à 110 km/h (l'indice de vitesse prescrit du pneumatique est égal à 120 km/h) sous une charge variant entre la charge nominale et 1.9 fois la charge nominale et à des pressions de gonflage variant entre 0.7 fois et 1.1 fois la pression nominale.

Un seuil de kilométrage réalisé est défini pour considérer les pneumatiques comme étant suffisamment endurant.

L'ensemble des pneumatiques testé à satisfait ce test en dépassant le seuil fixé.

Les pneumatiques selon l'invention conduisent donc à des performances notamment en termes d'endurance satisfaisantes.

La masse du pneumatique de référence est égale à 21.9 Kg.

La masse du pneumatique selon l'invention de la première série (câbles identiques dans les deux couches d'armature carcasse) est égale à 19.7 Kg.

La masse du pneumatique selon l'invention de la deuxième série (câbles différents dans les deux couches d'armature carcasse) est égale à 19.7 Kg.

## Revendications

1. Pneumatique à armature de carcasse radiale, dont la pression de gonflage est supérieure ou égale à 6 bars, comprenant une armature de sommet, elle-même coiffée radialement d'une bande de roulement, ladite bande de roulement étant réunie à deux bourrelets (1), comportant une tringle (3), par l'intermédiaire de deux flancs, ladite armature de carcasse étant constituée de deux couches (2, 6) d'éléments de renforcement textiles, une première couche d'armature de carcasse (2) étant retournée autour de la tringle (3) dans chacun des bourrelets (1), les extrémités (5) de ladite première couche d'armature de carcasse (2) étant radialement extérieure au point radialement le plus extérieur de la tringle dans chaque bourrelet et la deuxième couche d'armature de carcasse (6) s'étendant d'un bourrelet (1) à l'autre, sans aucun retournement autour de la tringle dans chacun des bourrelets, ses extrémités (7) étant axialement extérieures au point axialement le plus extérieur de la tringle (3) dans chaque bourrelet, ledit pneumatique comprenant dans chaque flanc un premier élément de remplissage (10), axialement intérieur à la surface extérieur d'un flanc et axialement extérieur au retournement (4) de la première couche d'armature de carcasse (2), constitué de mélange caoutchouteux présentant un module sécant d'élasticité sous tension à 10 % d'allongement Mj, chaque bourrelet comprenant un deuxième élément de remplissage (11), constitué de mélange caoutchouteux présentant un module sécant d'élasticité sous tension à 10 % d'allongement Mt, prolongeant radialement vers l'extérieur le noyau tringle, **caractérisé en ce que** chacune des couches d'armature de carcasse présente une force rupture par unité de largeur supérieure à 2250 daN/dm, **en ce que** la rigidité minimum par unité de la largeur, mesurée pour un allongement inférieur à 10%, de la deuxième couche d'armature de carcasse (6) est strictement supérieure à une valeur égale à 20% de la rigidité minimum par unité de largeur, mesurée pour un allongement inférieur à 10%, de la première couche d'armature de carcasse, la mesure de la rigidité minimum étant déterminée par la pente minimum de la courbe d'allongement entre 0 et 10% sur un intervalle de 2%, **en ce que** les éléments de renforcement des deux couches d'armature de carcasse présentent un titre inférieur à 750 tex, **en ce que** l'allongement des éléments de renforcement de la deuxième couche d'armature de carcasse (6) est supérieur à 4% sous une force 20 daN et **en ce que** les modules sécants d'élasticité sous tension à 10 % d'allongement Mt, Mj satisfont la relation Mt/Mj ≥ 1.

2. Pneumatique selon la revendication 1, **caractérisé en ce que,** dans un plan méridien, une unique couche d'éléments de renforcement est présente axialement entre la surface extérieure du pneumatique et le retournement (4) de la première couche d'armature de carcasse (2) dans une zone délimitée radialement vers l'extérieur par la direction axiale passant l'extrémité (5) du retournement (4) de la première couche d'armature de carcasse (2) et radialement vers l'intérieur par la direction axiale passant par l'intersection de la droite passant par le centre O de la courbure de la zone du pneumatique venant en appui sur le crochet de la jante, destinée à recevoir le pneumatique, et formant un angle de 45° avec la direction axiale et le retournement (4) de la première couche d'armature de carcasse (2).

3. Pneumatique selon l'une des revendications 1 ou 2, **caractérisé en ce que** chacune des couches d'armature de carcasse (2, 6) présente une force rupture par unité de largeur supérieure à 2900 daN/dm.

4. Pneumatique selon l'une des revendications 1 à 3, **caractérisé en ce que** les éléments de renforcement de la première couche d'armature de carcasse (2) présentent un titre supérieur à 300 tex et de préférence supérieur à 400 tex.

5. Pneumatique selon l'une des revendications précédentes, **caractérisé en ce qu'**il présente un load index strictement supérieur à 99.

6. Pneumatique selon l'une des revendications précédentes, la deuxième couche d'armature de carcasse (6) étant constituée d'éléments de renforcement entre deux couches de calandrage formées de mélange caoutchouteux présentant un module sécant d'élasticité sous tension à 10 % d'allongement Mc₂, **caractérisé en ce que** les modules sécants d'élasticité sous tension à 10 % d'allongement Mc₂, Mj satisfont la relation 0.6 ≤ Mc₂/Mj ≤ 4 et de préférence, satisfont la relation Mc₂/Mj ≤ 4.

7. Pneumatique selon l'une des revendications précédentes, les couches d'armature de carcasse (2, 6) étant constituées d'éléments de renforcement entre deux couches de calandrage formées de mélange caoutchouteux présentant un module sécant d'élasticité sous tension à 10 % d'allongement, respectivement notés Mc₁ pour la première couche d'armature de carcasse (2) et Mc₂ pour la deuxième couche d'armature de carcasse (6), **caractérisé en ce que** les modules sécants d'élasticité sous tension à 10 % d'allongement Mc₁, Mc₂ satisfont la relation Mc₂/Mc1≤ 4.6.

8. Pneumatique selon l'une des revendications précédentes, **caractérisé en ce que,** dans plan méridien, dans chaque bourrelet (1), le pneumatique comporte une couche d'éléments de renforcement en polyamide aromatique (12) au contact de ladite première couche d'armature de carcasse (2) sur toute sa longueur, au moins une partie étant radialement intérieure à la tringle (3) et dont les extrémités sont radialement extérieures au centre géométrique (8) de la tringle (3) et **en ce que** ladite première couche d'armature de carcasse (2) est intercalée entre la tringle (3) et la couche d'éléments de renforcement en polyamide aromatique (12).

9. Pneumatique selon l'une des revendications précédentes, **caractérisé en ce que,** dans tout plan méridien, dans chaque bourrelet (1), le pneumatique comporte une armature de contention (17) entourant la tringle (3) et un volume de mélange caoutchouteux directement au contact de la tringle.

10. Pneumatique selon l'une des revendications précédentes, la première couche d'armature de carcasse (2) formant une partie principale entre les deux tringles (3) et un retournement (4) dans chacun des bourrelets (1), **caractérisé en ce que,** dans tout plan méridien, dans chaque bourrelet (1), le retournement (4) de la première couche d'armature de carcasse (2) est distant de la partie principale d'une distance d comprise entre 0.5 et 3.2 mm sur une longueur L d'au moins 15 mm.

11. Pneumatique selon l'une des revendications précédentes, **caractérisé en ce que** les éléments de renforcement de la première couche d'armature de carcasse (2) sont identiques à ceux de la deuxième couche d'armature de carcasse (6).

12. Pneumatique selon l'une des revendications 8 à 11, **caractérisé en ce que,** la direction (15) passant par le centre O de la courbure de la zone du pneumatique venant en appui sur le crochet de la jante, destinée à recevoir le pneumatique, et l'extrémité (13) axialement extérieure de la couche d'éléments de renforcement en polyamide aromatique (12) forme un angle α avec la direction axiale compris entre 0 et 45°.

13. Pneumatique selon l'une des revendications 8 à 12, **caractérisé en ce que** la direction (16) passant par le centre O de la courbure de la zone du pneumatique venant en appui sur le crochet de la jante, destinée à recevoir le pneumatique, et l'extrémité (14) axialement intérieure de la couche d'éléments de renforcement en polyamide aromatique (12) forme un angle β avec la direction axiale compris entre 0 et 20°.

14. Pneumatique selon l'une des revendications précédentes, **caractérisé en ce que,** la direction passant par le centre géométrique (8) de la tringle (3) et l'extrémité (7) de la deuxième couche d'armature de carcasse (6) forme un angle θ avec la direction axiale inférieur à 50°.

15. Pneumatique selon l'une des revendications 8 à 14, **caractérisé en ce que** la distance entre l'extrémité (7) de la deuxième couche d'armature de carcasse (6) et l'extrémité (13) axialement la plus extérieure de la couche d'éléments de renforcement en polyamide aromatique (12) est supérieure à 5 mm.

16. Utilisation d'un pneumatique tel que décrit selon l'une des revendications 1 à 15 pour un véhicule de type petit poids lourd.

## Patentansprüche

1. Reifen mit radialer Karkassenbewehrung, dessen Reifendruck größer oder gleich 6 bar ist, umfassend eine Scheitelbewehrung, die selbst radial von einer Lauffläche überdeckt ist, wobei die Lauffläche mit zwei Wülsten (1), umfassend einen Wulstkern (3), über zwei Flanken verbunden ist, wobei die Karkassenbewehrung aus zwei Lagen (2, 6) aus textilen Verstärkungselementen gebildet ist, wobei eine erste Karkassenbewehrungslage (2) in jedem der Wülste (1) um den Wulstkern (3) herumgeschlagen ist, wobei die Enden (5) der ersten Karkassenbewehrungslage (2) radial außerhalb des radial äußersten Punktes des Wulstkerns in jedem Wulst liegen und wobei sich die zweite Karkassenbewehrungslage (6) von einem Wulst (1) zum anderen ohne irgendeinen Umschlag um den Wulstkern in jedem der Wülste erstreckt, wobei ihre Enden (7) axial außerhalb des axial äußersten Punktes des Wulstkerns (3) in jedem Wulst liegen, wobei der Reifen in jeder Flanke ein erstes Füllelement (10) aufweist, das axial innerhalb der äußeren Oberfläche einer Flanke und axial außerhalb des Umschlags (4) der ersten Karkassenbewehrungslage (2) liegt, das aus einer Kautschukmischung gebildet ist, die ein Sekanten-Elastizitätsmodul unter Spannung bei 10 % Dehnung Mj aufweist, wobei jeder Wulst eine zweites Füllelement (11) aufweist, das aus einer Kautschukmischung gebildet ist, die ein Sekanten-Elastizitätsmodul unter Spannung bei 10 % Dehnung Mt aufweist, das den Wulstkern radial nach außen verlängert, **dadurch gekennzeichnet, dass** jede der Karkassenbewehrungslagen eine Bruchkraft pro Breiteneinheit von über 2250 daN/dm aufweist, dadurch, dass die minimale Steifigkeit pro Breiteneinheit, die für eine Dehnung von weniger als 10 % gemessen wird, der zweiten Karkassenbewehrungslage (6) deutlich oberhalb von einem Wert von gleich 20 % der Mindeststeifigkeit pro Breiteneinheit liegt, die für eine Dehnung von weniger als 10 % der ersten Karkassenbewehrungslage gemessen wird, wobei die Messung der Mindeststeifigkeit durch die minimale Steigung der Dehnungskurve zwischen 0 und 10 % in einen Bereich von 2 % bestimmt wird, dadurch, dass die Verstärkungselemente der zwei Karkassenbewehrungslagen einen Titer von weniger als 750 tex aufweisen, dadurch, dass die Dehnung der Verstärkungselemente der zweiten Karkassenbewehrungslage (6) größer als 4 % unter einer Kraft von 20 daN ist und dadurch dass die Sekanten-Elastizitätsmodule unter Spannung bei 10 % Dehnung Mt, Mj die Beziehung Mt/Mj ≥ 1 erfüllen.

2. Reifen nach Anspruch 1, **dadurch gekennzeichnet, dass** in einer Meridianebene eine einzige Schicht von Verstärkungselementen axial zwischen der äußeren Oberfläche des Reifens und dem Umschlag (4) der ersten Karkassenbewehrungslage (2) in einem Bereich vorhanden ist, der radial nach außen durch die axiale Richtung, die durch das Ende (5) des Umschlags (4) der ersten Karkassenbewehrungslage (2) verläuft, und radial nach innen durch die axiale Richtung begrenzt ist, die durch den Schnittpunkt der Geraden verläuft, die durch die Mitte O der Kurve des Bereichs des Reifens verläuft, der auf dem Felgenhaken in Auflage kommt, der dazu bestimmt ist, den Reifen aufzunehmen, und einen Winkel von 45° mit der axialen Richtung und dem Umschlag (4) der ersten Karkassenbewehrungslage (2) bildet.

3. Reifen nach einem der Ansprüche 1 oder 2, **dadurch gekennzeichnet**, das jede der Karkassenbewehrungslagen (2, 6) eine Bruchkraft pro Breiteneinheit von über 2900 daN/dm aufweist.

4. Reifen nach einem der Ansprüche 1 bis 3, **dadurch gekennzeichnet, dass** die Verstärkungselemente der ersten Karkassenbewehrungslage (2) einen Titer von über 300 tex und vorzugsweise von über 400 tex aufweisen.

5. Reifen nach einem der vorhergehenden Ansprüche, **dadurch gekennzeichnet, dass** er einen Loadindex aufweist, der streng über 99 liegt.

6. Reifen nach einem der vorhergehenden Ansprüche, **dadurch gekennzeichnet, dass** die zweite Karkassenbewehrungslage (6) aus Verstärkungselementen zwischen zwei Kalandrierschichten besteht, die aus einer Kautschukmischung gebildet sind, die ein Sekanten-Elastizitätsmodul unter Spannung bei 10 % Dehnung Mc₂ aufweist, **dadurch gekennzeichnet, dass** die Sekanten-Elastizitätsmodule unter Spannung bei 10 % Dehnung Mc₂, Mj die Beziehung 0,6 ≤ Mc₂/Mj ≤ 4 erfüllen und vorzugsweise die Beziehung Mc₂/Mj < 4 erfüllen.

7. Reifen nach einem der vorhergehenden Ansprüche, **dadurch gekennzeichnet, dass** die Karkassenbewehrungslagen (2, 6) aus Verstärkungselementen zwischen zwei Kalandrierschichten gebildet sind, die aus einer Kautschukmischung gebildet sind, die ein Sekanten-Elastizitätsmodul unter Spannung bei 10 % Dehnung aufweist, die jeweils Mc₁ für die erste Karkassenbewehrungslage (2) und Mc₂ für die zweite Karkassenbewehrungslage (6) genannt werden, **dadurch gekennzeichnet, dass** die Sekanten-Elastizitätsmodule unter Spannung bei 10 % Dehnung Mc₁, Mc₂ die Beziehung Mc₂/Mc₁ ≤ 4,6 erfüllen.

8. Reifen nach einem der vorhergehenden Ansprüche, **dadurch gekennzeichnet, dass** der Reifen in der Meridianebene in jedem Wulst (1) eine Lage von Verstärkungselementen aus aromatischem Polyamid (12) in Kontakt mit der ersten Karkassenbewehrungslage (2) über ihre gesamte Länge aufweist, wobei sich mindestens ein Teil radial innerhalb des Wulstkerns (3) befindet und deren Enden sich radial außerhalb der geometrischen Mitte (8) des Wulstkerns (3) befinden, und dadurch, dass die erste Karkassenbewehrungslage (2) zwischen dem Wulstkern (3) und der Lage von Verstärkungselementen aus aromatischem Polyamid (12) angeordnet ist.

9. Reifen nach einem der vorhergehenden Ansprüche, **dadurch gekennzeichnet, dass** der Reifen in jeder Meridianebene in jedem Wulst (1) eine Begrenzungsarmatur (17), die den Wulst (3) umgibt, und ein Volumen der Kautschukmischung aufweist, das direkt in Kontakt mit dem Wulst ist.

10. Reifen nach einem der vorhergehenden Ansprüche, wobei die erste Karkassenbewehrungslage (2) einen dritten Hauptteil zwischen den zwei Wulsten (3) und einen Umschlag (4) in jedem der Wulste (1) bildet, **dadurch gekennzeichnet, dass** in jeder Meridianebene in jedem Wulst (1) der Umschlag (4) der ersten Karkassenbewehrungslage (2) von dem Hauptteil um einen Abstand d zwischen 0,5 und 3,2 mm über eine Länge L von mindestens 15 mm entfernt ist.

11. Reifen nach einem der vorhergehenden Ansprüche, **dadurch gekennzeichnet, dass** die Verstärkungselemente der ersten Karkassenbewehrungslage (2) mit jenen der zweiten Karkassenbewehrungslage (6) identisch sind.

12. Reifen nach einem der Ansprüche 8 bis 11, **dadurch gekennzeichnet, dass** die Richtung (15), die durch die Mitte O der Kurve des Bereichs des Reifens verläuft, der auf dem Felgenhaken in Auflage kommt, der dazu bestimmt ist, den Reifen aufzunehmen, und das axial äußere Ende (13) der Lage von Verstärkungselementen aus aromatischem Polyamid (12) einen Winkel α mit der axialen Richtung bildet, der zwischen 0 und 45° beträgt.

13. Reifen nach einem der Ansprüche 8 bis 12, **dadurch gekennzeichnet, dass** die Richtung (16), die durch die Mitte O der Kurve des Bereichs des Reifens verläuft, der auf dem Felgenhaken in Auflage kommt, der dazu bestimmt ist, den Reifen aufzunehmen, und das axial innere Ende (14) der Schicht von Verstärkungselementen aus aromatischem Polyamid (12) einen Winkel β mit der axialen Richtung bildet, der zwischen 0 und 20° beträgt.

14. Reifen nach einem der vorhergehenden Ansprüche, **dadurch gekennzeichnet, dass** die Richtung, die durch die geometrische Mitte (8) des Wulstkerns (3) verläuft, und das Ende (7) der zweiten Karkassenbewehrungslage (6) einen Winkel θ mit der axialen Richtung bildet, der kleiner als 50° ist.

15. Reifen nach einem der Ansprüche 8 bis 14, **dadurch gekennzeichnet, dass** der Abstand zwischen dem Ende (7) der zweiten Karkassenbewehrungslage (6) und dem axial äußersten Ende (13) der Schicht von Verstärkungselementen aus aromatischem Polyamid (12) größer als 5 mm ist.

16. Verwendung eines Reifens, wie nach einem der Ansprüche 1 bis 15 beschrieben, für ein Fahrzeug des Typs des Kleinlastwagens.

## Claims

1. Tyre with radial carcass reinforcement, the inflation pressure of which is greater than or equal to 6 bar, comprising a crown reinforcement, itself capped radially by a tread, the said tread being connected to two beads (1), comprising a bead wire (3), by two sidewalls, the said carcass reinforcement being made up of two layers (2, 6) of textile reinforcing elements, a first layer of carcass reinforcement (2) being turned up around the bead wire (3) in each of the beads (1), the ends (5) of the said first layer of carcass reinforcement (2) being radially on the outside of the radially outermost point of the bead wire in each bead and the second layer of carcass reinforcement (6) extending from one bead (1) to the other without any turnup around the bead wire in each of the beads, its ends (7) being axially on the outside of the axially outermost point of the bead wire (3) in each bead, the said tyre comprising in each sidewall a first filling element (10), axially on the inside of the exterior surface of a sidewall and axially on the outside of the turnup (4) of the first layer of carcass reinforcement (2), and made of a rubber compound having a secant elastic modulus under tension at 10% elongation of Mj, each bead comprising a second filling element (11) made of a rubber compound having a secant elastic modulus under tension at 10% elongation of Mt, extending the bead wire core radially towards the outside, **characterized in that** each of the layers of carcass reinforcement has a breaking force per unit width higher than 2250 daN/dm, **in that** the minimum strength per unit width, measured for an elongation of less than 10%, of the second layer of carcass reinforcement (6) is strictly greater than a value equal to 20% of the minimum strength per unit width, measured for an elongation of less than 10%, of the first layer of carcass reinforcement, the minimum strength measurement being determined by the minimum gradient of the elongation curve between 0 and 10% over a range of 2%, **in that** the reinforcing elements of the two layers of carcass reinforcement have a thread count of less than 750 tex, **in that** the elongation of the reinforcing elements of the second layer of carcass reinforcement (6) is greater than 4% under a force of 20 daN and **in that** the secant elastic modulus values under tension at 10% elongation, Mt, Mj, satisfy the relationship Mt/Mj ≥ 1.

2. Tyre according to Claim 1, **characterized in that,** in a meridian plane, a single layer of reinforcing elements is present axially between the exterior surface of the tyre and the turnup (4) of the first layer of carcass reinforcement (2) in a zone delimited radially towards the outside by the axial direction passing through the end (5) of the turnup (4) of the first layer of carcass reinforcement (2) and radially towards the inside by the axial direction passing through the intersection of the straight line passing through centre O of curvature of the zone of the tyre that comes to bear on the rim flange, intended to accept the tyre, and making an angle of 45° with the axial direction and the turnup (4) of the first layer of carcass reinforcement (2).

3. Tyre according to one of Claims 1 and 2, **characterized in that** each of the layers of carcass reinforcement (2, 6) has a breaking force per unit width greater than 2900 daN/dm.

4. Tyre according to one of Claims 1 to 3, **characterized in that** the reinforcing elements of the first layer of carcass reinforcement (2) have a thread count higher than 300 tex and preferably higher than 400 tex.

5. Tyre according to one of the preceding claims, **characterized in that** it has a load index strictly higher than 99.

6. Tyre according to one of the preceding claims, the second layer of carcass reinforcement (6) being made up of reinforcing elements between two skim layers formed of rubber compound having a secant elastic modulus under tension at 10% elongation of Mc₂, **characterized in that** the secant elastic modulus values under tension at 10% elongation, Mc₂, Mj, satisfy the relationship 0.6 ≤ Mc₂/Mj ≤ 4 and preferably satisfy the relationship Mc₂/Mj < 4.

7. Tyre according to one of the preceding claims, the layers of carcass reinforcement (2, 6) being made up of reinforcing elements between two skim layers formed of rubber compound having a secant elastic modulus under tension at 10% elongation, denoted Mc₁ for the first layer of carcass reinforcement (2) and Mc₂ for the second layer of carcass reinforcement (6) respectively, **characterized in that** the secant elastic modulus values under tension at 10% elongation Mc₁, Mc₂ satisfy the relationship Mc₂/Mc1 ≤ 4.6.

8. Tyre according to one of the preceding claims, **characterized in that,** in a meridian plane, in each bead (1), the tyre comprises a layer of reinforcing elements made of aromatic polyamide (12) in contact with the said first layer of carcass reinforcement (2) over the entire length thereof, at least a part being radially on the inside of the bead wire (3) and of which the ends are radially on the outside of the geometric centre (8) of the bead wire (3) and **in that** the said first layer of carcass reinforcement (2) is interposed between the bead wire (3) and the layer of reinforcing elements made of aromatic polyamide (12).

9. Tyre according to one of the preceding claims, **characterized in that,** in any meridian plane, in each bead (1), the tyre comprises a retention reinforcement (17) surrounding the bead wire (3) and a volume of rubber compound directly in contact with the bead wire.

10. Tyre according to one of the preceding claims, the first layer of carcass reinforcement (2) forming a main part between the two bead wires (3) and a turnup (4) in each of the beads (1), **characterized in that,** in any meridian plane, in each bead (1), the turnup (4) of the first layer of carcass reinforcement (2) is distant from the main part by a distance d of between 0.5 and 3.2 mm over a length L of at least 15 mm.

11. Tyre according to one of the preceding claims, **characterized in that** the reinforcing elements of the first layer of carcass reinforcement (2) are identical to those of the second layer of carcass reinforcement (6).

12. Tyre according to one of Claims 8 to 11, **characterized in that** the direction (15) passing through the centre O of curvature of the zone of the tyre that comes to bear against the flange of the rim intended to accept the tyre, and the axially external end (13) of the layer of reinforcing elements made of aromatic polyamide (12) makes an angle α of between 0 and 45° with the axial direction.

13. Tyre according to one of Claims 8 to 12 **characterized in that** the direction (16) passing through the centre O of curvature of the zone of the tyre that comes to bear against the flange of the rim intended to accept the tyre and the axially interior end (14) of the layer of reinforcing elements made of aromatic polyamide (12) makes an angle β of between 0 and 20° with the axial direction.

14. Tyre according to one of the preceding claims, **characterized in that** the direction passing through the geometric centre (8) of the bead wire (3) and the end (7) of the second layer of carcass reinforcement (6) makes an angle θ of less than 50° with the axial direction.

15. Tyre according to one of Claims 8 to 14, **characterized in that** the distance between the end (7) of the second layer of carcass reinforcement (6) and the axially outermost end (13) of the layer of reinforcing elements made of aromatic polyamide (12) is greater than 5 mm.

16. Use of a tyre as described in one of Claims 1 to 15 for a vehicle of light truck type.
